Europäisches Patentamt

European Patent Office

Office européen des brevets

(11) Publication number: **0 456 198 A1**

## (12) EUROPEAN PATENT APPLICATION

(21) Application number: 91107425.0

(22) Date of filing: 07.05.91

(51) Int. Cl.⁵: **A01N 37/40**, A01N 25/04,
//(A01N37/40,47:36,25:04),
(A01N25/04,37:40,47:36)

(30) Priority: 10.05.90 JP 118791/90
16.05.90 JP 124019/90

(43) Date of publication of application:
**13.11.91 Bulletin 91/46**

(84) Designated Contracting States:
**ES IT**

(71) Applicant: **HODOGAYA CHEMICAL CO., LTD.**
**4-2, Toranomon 1-chome Minato-ku**
**Tokyo(JP)**

Applicant: **TOHO CHEMICAL INDUSTRY CO.,**
**LTD.**
**2-5, Nihonbashi Ningyocho 1-chome**
**Chuo-ku, Tokyo(JP)**

(72) Inventor: **Tokunaga, Hiroki, Hodogaya**
**Chemical Co., Ltd.**
**Central Research Laboratory, 2-30, Oji**
**6-chome**
**Kita-ku, Tokyo(JP)**
Inventor: **Kikuta, Masaji, Hodogaya Chemical**
**Co., Ltd.**

**Central Research Laboratory, 2-30, Oji**
**6-chome**
**Kita-ku, Tokyo(JP)**
Inventor: **Motegi, Takeo, Hodogaya Chemical**
**Co., Ltd.**
**Central Research Laboratory, 2-30, Oji**
**6-chome**
**Kita-ku, Tokyo(JP)**
Inventor: **Inayoshi, Yukihiko, Hodogaya**
**Chemical Co., Ltd.**
**Central Research Laboratory, 2-30, Oji**
**6-chome**
**Kita-ku, Tokyo(JP)**
Inventor: **Terado, Tomoyuki**
**9-6, Nishikamakura 3-chome**
**Kamakura-shi, Kanagawa-ken(JP)**
Inventor: **Okada, Kenji**
**12-19, Okamura 3-chome, Isogo-ku**
**Yokohama-shi, Kanagawa-ken(JP)**

(74) Representative: **Wächtershäuser, Günter, Dr.**
**Tal 29**
**W-8000 München 2(DE)**

(54) Oil suspension concentrate for direct paddy water application.

(57) An oil suspension concentrate for direct paddy water application, which comprises from 5 to 40% by weight of 2',3'-dichloro-4-ethoxymethoxybenzanilide as a herbicidally active ingredient and a mineral oil or vegetable oil as a dispersing medium, wherein a nonionic surfactant and anionic surfactant having a HLB of from 3 to 10 are incorporated. Also disclosed is an oil suspension concentrate for direct paddy water application, which comprises from 5 to 40% by weight of 2',3'-dichloro-4-ethoxymethoxybenzanilide and from 0.15 to 1.5% by weight of methyl-α-(4,6-dimethoxypyrimidin-2-ylcarbamoylsulfamoyl)-O-toluate as herbicidally active ingredients and a mineral oil or vegetable oil as a dispersing medium, wherein a nonionic surfactant and anionic surfactant having a HLB of from 3 to 10 are incorporated.

EP 0 456 198 A1

The present invention relates to an oil suspension concentrate of herbicide for direct paddy water application.

Heretofore, formulations of herbicide for paddy field include a granule, an emulsifiable concentrate, a wettable powder and an aqueous suspension concentrate. The granule is most widely used, since it can be applied relatively easily without requiring any special apparatus. However, the granule has drawbacks that the content of the herbicidally active component is small, and the production cost tends to be high, since for its preparation, it is necessary to mix a carrier such as clay, bentonite, talc or kaolin, a binder and a surfactant, followed by steps of granulation and drying. Besides, it has a drawback that the herbicidal effects tend to vary due to a variation in the application.

The emulsifiable concentrate is not applicable in the case of a herbicide having a low solubility to an organic solvent, and it further has a drawback that due to the organic solvent, it tends to have inflammability, odor, toxicity to human being and small animals and phytotoxicity to some crop plants.

The wettable powder has a problem from the viewpoint of working environment, since the wettable powder itself tends to scatter as fine powder at the time of preparing a solution for application.

In recent years, it has been common to employ an aqueous suspension concentrate (a flowable) which is prepared by finely pulverizing solid active ingredient of an agricultural chemical and suspending it in water as a dispersing medium by an addition of a surfactant or a water-soluble polymer to obtain a stabilized suspension. This formulation has a merit that since water is used as the dispersing medium, there will be no problem of phytotoxicity, inflammability, odor or toxicity to human being and small animals due to an organic solvent, and the activities can be as high as an emulsifiable concentrate. However, it is likely to undergo separation and hard caking during its storage for a long period of time, and it further has a drawback that the herbicide active ingredient which can be used is restricted to the one which has a high melting point, a low degree of solubility in water and chemical stability.

Further, in the application of the above-mentioned emulsifiable concentrate, wettable powder and aqueous suspension concentrate, it is necessary to dilute them with a large amount of water for application, and thus they have a drawback that a substantial labor and time are required, and a apparatus for application is also required.

The conventional formulations have the above-mentioned drawbacks. The present inventors have conducted an extensive research with an aim to solve such problems and to reduce the labor for the application and as a result, have found an oil suspension concentrate which can directly be applied to the water surface of an irrigated paddy field without diluting it with a large amount of water or without necessity of a special apparatus or tool for application, whereby the herbicidal agent rapidly spreads over the water surface and then uniformly disperse in water to provide effective herbicidal effects. The present invention has been accomplished on the basis of this discovery.

The present invention provides an oil suspension concentrate for direct paddy water application, which comprises from 5 to 40% by weight of 2',3'-dichloro-4-ethoxymethoxybenzanilide as a herbicidally active ingredient and a mineral oil or vegetable oil as a dispersing medium, wherein a nonionic surfactant and anionic surfactant having a HLB of from 3 to 10 are incorporated.

Further, the present invention provides an oil suspension concentrate for direct paddy water application, which comprises from 5 to 40% by weight of 2',3'-dichloro-4-ethoxymethoxybenzanilide and from 0.15 to 1.5% by weight of methyl-$\alpha$-(4,6-dimethoxypyrimidin-2-ylcarbamoylsulfamoyl)-O-toluate as herbicidally active ingredients and a mineral oil or vegetable oil as a dispersing medium, wherein a nonionic surfactant and anionic surfactant having a HLB of from 3 to 10 are incorporated.

Now, the present invention will be described in detail with reference to the preferred embodiments.

The oil suspension concentrate for direct paddy water application according to the present invention comprises a finely pulverized herbicidally active ingredient and mineral oil or vegetable oil as a dispersing medium, wherein a nonionic surfactant and anionic surfactant having a HLB of from 3 to 10 are incorporated, and when dropped to water, it exhibits spreadability on the water surface and self emulsifiability. For its application, the operator may simply drop it at one point or at a few points on the water surface of the paddy field without stepping in the paddy field, whereby the herbicide will spread on the water surface over a substantially wider range as compared with the conventional formulations and thereafter uniformly disperse in water to provide adequate herbicidal effects. In the case of conventional emulsifiable concentrate, wettable powder and aqueous suspension concentrate, the operator steps in the paddy field and applies a solution diluted with a large amount of water, whereby the spreadability of the solution applied by an application apparatus is at a level of a few $m^2$ to 10 $m^2$, and substantial labor and time are required for its application over a wide paddy field. The present invention has essentially solved this problem and has made the reduction of the labor for application possible. Further, the aqueous suspension concentrate can not be used when the solubility in water of the herbicide active ingredient is

2

100 ppm or higher (25°C) because of e.g. hard caking. Whereas, the present invention has no such restriction and can be applied to a wide range of herbicide active ingredients.

The oil suspension concentrate of the present invention exhibits such effects as suspension stability, emulsifiability in water and spreadability on the water surface by the incorporation of the nonionic surfactant and anionic surfactant having a HLB of from 3 to 10. If HLB is outside the range of from 3 to 10, the suspension stability, emulsifiability in water and spreadability on the water surface tend to be poor, and there will be problems such as a reduction in the herbicidal effects and occurrence of phytotoxicity.

The nonionic surfactant and anionic surfactant having a HLB of from 3 to 10 which can be used in the present invention, include, for example, a sorbitan fatty acid ester, a polyoxyethylene sorbitan fatty acid ester, a polyoxyethylene resin acid ester, a polyoxyethylene alkyl ether, a polyoxyethylene fatty acid ester, a polyoxyethylene vegetable oil, a polyoxyethylene hardened vegetable oil, a polyoxyethylene fatty acid amide, a polyoxyethylene alkylamine, a polyoxyethylene polyoxypropylene block polymer, a polyoxyethylene alkylphenyl ether, a polyoxyethylene alkylphenyl ether polymer, a polyoxyalkylene benzylphenyl (or phenylphenyl) ether, a polyoxyalkylene styrylphenyl (or phenylphenyl) ether, an alkylbenzene sulfonate, a dialkyl sulfosuccinate, an alkylnaphthalene sulfonate, a naphthalene sulfonate formalin condensation product, an alkyl sulfate (or phosphate), a polyoxyethylene alkyl ether sulfate (or phosphate), a polyoxyethylene alkylphenyl ether sulfate (or phosphate), a polyoxyalkylene benzylphenyl (or phenylphenyl) ether sulfate (or phosphate), a polyoxyalkylene styrylphenyl (or phenylphenyl) ether sulfate (or phosphate) and a polyoxyethylene-polyoxypropylene block polymer sulfate (or phosphate). However, they are not restricted to such specific examples.

The oil dispersing medium which can be used in the present invention, includes mineral oils and vegetable oils which are chemically inactive, contain no substantial polar groups and have minimum odor and high flash points. The mineral oils include agricultural machine oil, paraffin oil, naphthene oil and mineral spirit. The vegetable oils include soybean oil, cotton oil, palm oil and sunflower oil. However, the dispersing medium is not restricted to such specific examples.

In addition to the above components, various additives such as a decomposition-preventing agent, an antioxidant, a viscosity-builder and a suspension stabilizer, may be added as the case requires.

The oil suspension concentrate of the present invention can be obtained by mixing the oil dispersing medium and the surfactant to the herbicide active ingredients preliminarily pulverized to a particle size of from 20 to 50 μm by a dry pulverizer such as a pin mill or jet-O-mizer and then subjecting the mixture to fine pulverization treatment by a wet pulverizer such as a ball mill, a sand mill or a Dyno mill. The oil suspension concentrate thus obtained has an average particle size of from 1 to 3 μm.

Now, the present invention will be described in further detail with reference to Examples. However, it should be understood that the present invention is by no means restricted to such specific Examples.

EXAMPLE 1

16% by weight of herbicide active ingredient A preliminarily pulverized in a dry system by a jet-O-mizer (made by Seishin Kigyo K.K.), 74% by weight of soybean oil and 10% by weight of Sorpol 3969 [tradename for a combination of a nonionic surfactant and an anionic surfactant having a HLB of 5.9, manufactured by Toho Chemical Industries Co., Ltd. (hereinafter Sorpol is a trademark by Toho Chemical Co., Ltd.)] were charged into a 400 mℓ vessel of a sand grinder (made by Igarashi Kikai Seizo K.K.) so that the total weight would be 100 g and then 100 mℓ of glass beads having a diameter of from 1.5 to 2.0 mm were added thereto. Then, the disc was rotated at a peripheral speed of 5.8 m/sec for 30 minutes to obtain a uniform oil suspension concentrate finely pulverized to an average particle size of 1.5 μm (this was designated as Formulation No. 1).

EXAMPLE 2

16% by weight of herbicide active ingredient A preliminarily pulverized in a dry system by a jet-O-mizer, 74% by weight of agricultural machine oil and 10% by weight of Sorpol 2401D-3 (combination of a nonionic surfactant and an anionic surfactant having a HLB of 8.9) were mixed and subjected to fine pulverization under the same condition as in Example 1 to obtain a uniform oil suspension concentrate finely pulverized to an average particle size of 1.5 μm (this was designated as Formulation No. 2).

EXAMPLE 3

16% by weight of herbicide active ingredient A preliminarily pulverized in a dry system by a jet-O-mizer, 74% by weight of cotton oil, and 10% by weight of Sorpol 3876 (combination of a nonionic surfactant and an anionic surfactant having a HLB of 5.5) were mixed and subjected to fine pulverization under the same condition as in Example 1 to obtain a uniform oil suspension concentrate finely pulverized to an average particle size of 1.5 μm (this was designated as Formulation No. 3).

EXAMPLE 4

16% by weight of herbicide active ingredient A preliminarily pulverized in a dry system by a jet-O-miser, 74% by weight of spindle oil, and 10% by weight of Sorpol 3733 (combination of a nonionic surfactant and an anionic surfactant having a HLB of 6.3) were mixed and subjected to fine pulverization under the same condition as in Example 1 to obtain a uniform oil suspension concentrate finely pulverized to an average particle size of 1.5 μm (this was designated as Formulation No. 4).

EXAMPLE 5

32% by weight of herbicide active ingredient A preliminarily pulverized in a dry system by a jet-O-miser, 56% by weight of agricultural machine oil, and 12% by weight of Sorpol 2401D-3, were mixed and subjected to fine pulverization under the same condition as in Example 1 to obtain a uniform oil suspension concentrate finely pulverized to an average particle size of 1.5 μm (this was designated as Formulation No. 5).

COMPARATIVE EXAMPLE 1

16% by weight of herbicide active ingredient A preliminarily pulverized in a dry system by a jet-O-mizer, 74% by weight of soybean oil and 10% by weight of Sorpol 2934 (combination of a nonionic surfactant and an anionic surfactant having a HLB of 13.2) were mixed and subjected to fine pulverization under the same condition as in Example 1 to obtain a uniform oil suspension concentrate finely pulverized to an average particle size of 1.5 μm (this was designated as Formulation No. Comparative-1).

COMPARATIVE EXAMPLE 2

16% by weight of herbicide active ingredient A preliminarily pulverized in a dry system by a jet-O-mizer, 74% by weight of soybean oil and 10% by weight of Sorpol 7513 (combination of a nonionic surfactant and an anionic surfactant having a HLB of 2.5) were mixed and subjected to fine pulverization under the same condition as in Example 1 to obtain a uniform oil suspension concentrate finely pulverized to an average particle size of 1.5 μm (this was designated as Formulation No. Comparative-2).

COMPARATIVE EXAMPLE 3

16% by weight of herbicide active ingredient A preliminarily pulverized in a dry system by a jet-O-mizer, 5.0% by weight of glycol, 0.1% by weight of xanthan gum, 73.7% by weight of water and 5.2% by weight of Sorpol 3741 were mixed and subjected to fine pulverization under the same condition as in Example 1 to obtain a uniform aqueous suspension concentrate finely pulverized to an average particle size of 1.5 μm (this was designated as Formulation No. Comparative-3).

COMPARATIVE EXAMPLE 4

5.3% by weight of herbicide active ingredient A preliminarily pulverized in a dry system by a jet-O-miser, 57.7% by weight of clay, 30.0% by weight of bentonite, 2.0% by weight of Sorpol 9047K, 1.0% by weight of Sorpol T-26 and 4.0% by weight of Sorpol 5181 were mixed, and then 10% by weight of water was added, and the mixture was kneaded, granulated by means of an extrusion granulating machine and then dried to obtain a granule having a particle size of 0.6 mm (this was designated as Formulation No. Comparative-4).

COMPARATIVE EXAMPLE 5

16% by weight of herbicide active ingredient A, 20% by weight of isophorone, 20% by weight of dimethylformamide, 19% by weight of xylene, 18% by weight of Sorpol 7537 and 7% by weight of Sorpol 3778 were mixed to obtain an emulsifiable concentrate (this was designated as Formulation No. Comparative-5).

TEST EXAMPLE 1: Test for spreadability on the water surface

In a paddy field in which seeds of barnyardgrass (Echinochloa crusgalli) were sown after paddling and leveling, a unit plot of 1 m x 12 m was provided. A liquid formulation was applied dropwise at one end of the plot in an amount corresponding to the amount of active ingredient usually employed, and a granule was uniformly applied over the entire surface within the plot.

Three weeks after the treatment, markings were made every 1 m in the longitudinal direction, and the herbicidal effects in the plot were examined in comparison with the non-treated plot. The results are shown in Table 1.

The standards for the examination were as follows.

Herbicidal effects · Phytotoxicity

0: Same as the non-treated    0: Nil

1: 20% control               1: 20% phytotoxicity

2: 40% control               2: 40% phytotoxicity

3: 60% control               3: 60% phytotoxicity

4: 80% control               4: 80% phytotoxicity

5: Complete control          5: Complete kill

(These standards are used also in the following Test Examples.)

5

Table 1: Results of the spreadability test

| Formulation No. | Dose ($m\ell$,g/12m$^2$) | Meters from one end | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| 1 | 12 m$\ell$ | 5 | 5 | 5 | 5 | 5 | 5 | 5 | 5 | 5 | 5 | 5 | 4.5 |
| 2 | 12 m$\ell$ | 5 | 5 | 5 | 5 | 5 | 5 | 5 | 5 | 5 | 5 | 5 | 4.5 |
| 3 | 12 m$\ell$ | 5 | 5 | 5 | 5 | 5 | 5 | 5 | 5 | 5 | 5 | 5 | 4 |
| 4 | 12 m$\ell$ | 5 | 5 | 5 | 5 | 5 | 5 | 5 | 5 | 5 | 5 | 4.5 | 4 |
| 5 | 6 m$\ell$ | 5 | 5 | 5 | 5 | 5 | 5 | 5 | 5 | 5 | 4.5 | 4.5 | 4 |
| Comparative-1 | 12 m$\ell$ | 5 | 5 | 5 | 5 | 4.5 | 4 | 3 | 2 | 0 | 0 | 0 | 0 |
| Comparative-2 | 12 m$\ell$ | 5 | 5 | 5 | 5 | 4.5 | 4 | 4 | 3 | 0 | 0 | 0 | 0 |
| Comparative-3 | 12 m$\ell$ | 5 | 5 | 5 | 5 | 4.5 | 4 | 4 | 3 | 0 | 0 | 0 | 0 |
| Comparative-4 | 36 g | 5 | 5 | 5 | 5 | 5 | 5 | 5 | 5 | 5 | 5 | 4.5 | 5 |
| Comparative-5 | 12 m$\ell$ | 5 | 5 | 5 | 4.5 | 4.5 | 4 | 4 | 2 | 0 | 0 | 0 | 0 |

Note: The numerical values indicate herbicidal effects.

TEST EXAMPLE 2: Treatment at the germination of weeds

Rice seedlings were transplanted by a usual method to a paddy field in which seeds of barnyardgrass (Echinochloa crusgalli) were scattered during paddling and leveling, and a unit plot of 10 m × 10 m was

EP 0 456 198 A1

6

provided therein. At the germination stage of weeds upon expiration of one week after the transplantation, a liquid formulation was applied at one spot at the center, and a granule was applied uniformly in the plot. One month after the treatment, the plot was divided into an area close to the center, an intermediate area and a far corner. In each area, four spots of 1 m² were marked, and the examination was conducted in the same manner as in Test Example 1.

The results are shown in Table 2.

Table 2: Results of treatment at germination of weeds

| Formulation No. | Dose (ℓ,kg/10a) | Center portion | | | | Intermediate portion | | | | Corner | | | |
|---|---|---|---|---|---|---|---|---|---|---|---|---|---|
| | | 1 | 2 | 3 | 4 | 1 | 2 | 3 | 4 | 1 | 2 | 3 | 4 |
| 1 | 1 ℓ | 5 | 5 | 5 | 5 | 5 | 5 | 5 | 5 | 5 | 4.8 | 5 | 5 |
| 2 | 1 ℓ | 5 | 5 | 5 | 5 | 5 | 5 | 5 | 5 | 5 | 5 | 5 | 5 |
| 3 | 1 ℓ | 5 | 5 | 5 | 5 | 5 | 5 | 5 | 5 | 5 | 4.8 | 5 | 5 |
| 4 | 1 ℓ | 5 | 5 | 5 | 5 | 5 | 5 | 5 | 5 | 4.8 | 5 | 5 | 5 |
| 5 | 0.5 ℓ | 5 | 5 | 5 | 5 | 5 | 5 | 5 | 5 | 4.8 | 4.8 | 5 | 5 |
| Comparative-3 | 1 ℓ | 5 | 5 | 4.8 | 4.8 | 4 | 3 | 4 | 3 | 0 | 0 | 0 | 2 |
| Comparative-4 | 3 kg | 5 | 5 | 5 | 5 | 5 | 4.8 | 5 | 5 | 4.5 | 5 | 4.8 | 5 |

Note: The active ingredient had high selectivity, and the phytotoxicity was 0 in each case.

TEST EXAMPLE 3: Treatment at the growing stage of weeds

In a paddy field prepared in the same manner as in Test Example 2, a unit plot of 5 m x 20 m was provided, and a liquid formulation was applied in one half amount at each of two portions at the center in the 5 m axis. A granule was uniformly applied over the entire surface in the plot.

One month after the treatment, markings of 1 m² were provided at five spots in the plot, and the examination was conducted in the same manner as in Test Example 1.

The results are shown in Table 3 (at the left hand side, the average values of the herbicidal effects are indicated).

Table 3: Results of treatment during the growing stage of weeds

| Formulation No. | Dose (ℓ,kg/10a) | Herbicidal effects | | | | | Average value |
|---|---|---|---|---|---|---|---|
| | | End | Inter-mediate | Center | Inter-mediate | End | |
| 1 | 1 ℓ | 5 | 5 | 4.5 | 5 | 5 | 4.86 |
| 2 | 1 ℓ | 5 | 5 | 4.8 | 4.8 | 5 | 4.92 |
| 3 | 1 ℓ | 5 | 4.8 | 4.8 | 5 | 5 | 4.92 |
| 4 | 1 ℓ | 5 | 4.9 | 4.8 | 4.8 | 5 | 4.90 |
| 5 | 0.5 ℓ | 5 | 4.8 | 4.5 | 4.6 | 5 | 4.78 |
| Comparative-4 | 3 kg | 3.8 | 4.0 | 3.5 | 3.7 | 4.1 | 3.82 |

Note: The active ingredient had high selectivity, and the phytotoxicity value was 0 in each case.

9

EXAMPLE 6

16% by weight of herbicide active ingredient A and 0.5% by weight of herbicide active ingredient B preliminarily pulverized in a dry system by a jet-O-mizer (made by Seishin Kigyo K.K.), 73.5% by weight of soybean oil and 10% by weight of Sorpol 3969 [tradename for a combination of a nonionic surfactant and an anionic surfactant having a HLB of 5.9, manufactured by Toho Chemical Industries Co., Ltd. (hereinafter Sorpol is a trademark by Toho Chemical Co., Ltd.)] were charged into a 400 mℓ vessel of a sand grinder (made by Igarashi Kikai Seizo K.K.) so that the total weight would be 100 g and then 100 mℓ of glass beads having a diameter of from 1.5 to 2.0 mm were added thereto. Then, the disc was rotated at a peripheral speed of 5.8 m/sec for 30 minutes to obtain a uniform oil suspension concentrate finely pulverized to an average particle size of 1.5 μm (this was designated as Formulation No. 6).

EXAMPLE 7

16% by weight of herbicide active ingredient A and 0.5% by weight of herbicide active ingredient B preliminarily pulverized in a dry system by a jet-O-mizer, 73.5% by weight of agricultural machine oil and 10% by weight of Sorpol 2401D-3 (combination of a nonionic surfactant and an anionic surfactant having a HLB of 8.9) were mixed and subjected to fine pulverization under the same condition as in Example 6 to obtain a uniform oil suspension concentrate finely pulverized to an average particle size of 1.5 μm (this was designated as Formulation No. 7).

EXAMPLE 8

16% by weight of herbicide active ingredient A and 0.5% by weight of herbicide active ingredient B preliminarily pulverized in a dry system by a jet-O-mizer, 73.5% by weight of cotton oil, and 10% by weight of Sorpol 3876 (combination of a nonionic surfactant and an anionic surfactant having a HLB of 5.5) were mixed and subjected to fine pulverization under the same condition as in Example 6 to obtain a uniform oil suspension concentrate finely pulverized to an average particle size of 1.5 μm (this was designated as Formulation No. 8).

EXAMPLE 9

8.0% by weight of herbicide active ingredient A and 0.25% by weight of herbicide active ingredient B preliminarily pulverized in a dry system by a jet-O-mizer, 81.75% by weight of spindle oil, and 10% by weight of Sorpol 3733 (combination of a nonionic surfactant and an anionic surfactant having a HLB of 6.3) were mixed and subjected to fine pulverization under the same condition as in Example 6 to obtain a uniform oil suspension concentrate finely pulverized to an average particle size of 1.5 μm (this was designated as Formulation No. 9).

EXAMPLE 10

32.0% by weight of herbicide active ingredient A and 1.0% by weight of herbicide active ingredient B preliminarily pulverized in a dry system by a jet-O-miser, 55.0% by weight of agricultural machine oil, and 12% by weight of Sorpol 2401D-3, were mixed and subjected to fine pulverization under the same condition as in Example 6 to obtain a uniform oil suspension concentrate finely pulverized to an average particle size of 1.5 μm (this was designated as Formulation No. 10).

COMPARATIVE EXAMPLE 6

16% by weight of herbicide active ingredient A and 0.5% by weight of herbicide active ingredient B preliminarily pulverized in a dry system by a jet-O-miser, 73.5% by weight of soybean oil and 10% by weight of Sorpol 2934 (combination of a nonionic surfactant and an anionic surfactant having a HLB of 13.2) were mixed and subjected to fine pulverization under the same condition as in Example 6 to obtain a uniform oil suspension concentrate finely pulverized to an average particle size of 1.5 μm (this was designated as Formulation No. Comparative-6).

COMPARATIVE EXAMPLE 7

16% by weight of herbicide active ingredient A and 0.5% by weight of herbicide active ingredient B preliminarily pulverized in a dry system by a jet-O-miser, 73.5% by weight of soybean oil and 10% by weight of Sorpol 7513 (combination of a nonionic surfactant and an anionic surfactant having a HLB of 2.5) and subjected to fine pulverization under the same condition as in Example 6 to obtain a uniform oil suspension concentrate finely pulverized to an average particle size of 1.5 μm (this was designated as Formulation No. Comparative-7).

COMPARATIVE EXAMPLE 8

16% by weight of herbicide active ingredient A and 0.5% by weight of herbicide active ingredient B preliminarily pulverized in a dry system by a jet-O-mizer, 5.0% by weight of glycol, 0.1% by weight of xanthan gum, 73.2% by weight of water and 5.2% by weight of Sorpol 3741 were mixed and subjected to fine pulverization under the same condition as in Example 6 to obtain a uniform aqueous suspension concentrate finely pulverized to an average particle size of 1.5 μm (this was designated as Formulation No. Comparative-8).

COMPARATIVE EXAMPLE 9

5.3% by weight of herbicide active ingredient A and 0.2% by weight of herbicide active ingredient B preliminarily pulverized in a dry system by a jet-O-mizer, 57.5% by weight of clay, 30.0% by weight of bentonite, 2.0% by weight of Sorpol 9047K, 1.0% by weight of Sorpol T-26 and 4.0% by weight of Sorpol 5181 were mixed, and then 10% by weight of water was added, and the mixture was kneaded, granulated by means of an extrusion granulating machine and then dried to obtain a granule having a particle size of 0.6 mm (this was designated as Formulation No. Comparative-9).

TEST EXAMPLE 4: Test for spreadability on the water surface

In a paddy field in which seeds of barnyardgrass (Echinochloa crusgalli) and hardstem bulrush (Scirpus juncoides) were sown after paddling and leveling, a unit plot of 1 m x 12 m was provided. A liquid formulation was applied dropwise at one end of the plot in an amount corresponding to the amount of active ingredient usually employed, and a granule was uniformly applied over the entire surface within the plot.

Three weeks after the treatment, markings were made every 1 m in the longitudinal direction, and the herbicidal effects in the plot were examined in comparison with the non-treated plot. The results are shown in Table 4.

The standards for the examination were as follows.

| Herbicidal effects | Phytotoxicity |
|---|---|
| 0: Same as the non-treated | 0: Nil |
| 1: 20% control | 1: 20% phytotoxicity |
| 2: 40% control | 2: 40% phytotoxicity |
| 3: 60% control | 3: 60% phytotoxicity |
| 4: 80% control | 4: 80% phytotoxicity |
| 5: Complete control | 5: Complete kill |

(These standards are used also in the following Test Examples.)

Table 4: Results of the spreadability test (barnyardgrass)

| Formulation No. | Dose ($m\ell$,g/12m$^2$) | Meters from one end | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| 6 | 12 m$\ell$ | 5 | 5 | 5 | 5 | 5 | 5 | 5 | 5 | 5 | 5 | 4.8 | 4.5 |
| 7 | 12 m$\ell$ | 5 | 5 | 5 | 5 | 5 | 5 | 5 | 5 | 5 | 5 | 5 | 4.5 |
| 8 | 12 m$\ell$ | 5 | 5 | 5 | 5 | 5 | 5 | 5 | 5 | 5 | 5 | 4.5 | 4.5 |
| 9 | 12 m$\ell$ | 5 | 5 | 5 | 5 | 5 | 5 | 5 | 5 | 5 | 5 | 5 | 4.5 |
| 10 | 6 m$\ell$ | 5 | 5 | 5 | 5 | 5 | 5 | 5 | 5 | 5 | 4.8 | 4.5 | 4 |
| Comparative-6 | 12 m$\ell$ | 5 | 5 | 5 | 5 | 4.5 | 4 | 3 | 2 | 0 | 0 | 0 | 0 |
| Comparative-7 | 12 m$\ell$ | 5 | 5 | 5 | 4.5 | 4.5 | 4 | 4 | 3 | 0 | 0 | 0 | 0 |
| Comparative-8 | 12 m$\ell$ | 5 | 5 | 5 | 5 | 4.5 | 4 | 4 | 3 | 0 | 0 | 0 | 0 |
| Comparative-9 | 36 g | 5 | 5 | 4.8 | 5 | 5 | 5 | 5 | 5 | 5 | 5 | 4.5 | 5 |

Note: The numerical values in the Table indicate the herbicidal effects against barnyardgrass.

EP 0 456 198 A1

Table 4 (continued): Results of the spreadability test (hardstem bulrush)

| Formulation No. | Dose ($m\ell$,g/12m²) | Meters from one end | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| 6 | 12 $m\ell$ | 5 | 5 | 5 | 5 | 5 | 5 | 5 | 5 | 4.8 | 4.5 | 4.5 | 4 |
| 7 | 12 $m\ell$ | 5 | 5 | 5 | 5 | 5 | 5 | 5 | 5 | 5 | 5 | 4.5 | 4 |
| 8 | 12 $m\ell$ | 5 | 5 | 5 | 5 | 5 | 5 | 5 | 5 | 4.8 | 4.5 | 4.5 | 4 |
| 9 | 12 $m\ell$ | 5 | 5 | 5 | 5 | 5 | 5 | 5 | 5 | 5 | 4.8 | 4.5 | 4 |
| 10 | 6 $m\ell$ | 5 | 5 | 5 | 5 | 5 | 5 | 5 | 4.8 | 4.5 | 4 | 4 | 3 |
| Comparative-6 | 12 $m\ell$ | 5 | 5 | 5 | 4.5 | 4 | 4 | 3 | 0 | 0 | 0 | 0 | 0 |
| Comparative-7 | 12 $m\ell$ | 5 | 5 | 5 | 4.5 | 4 | 3 | 0 | 0 | 0 | 0 | 0 | 0 |
| Comparative-8 | 12 $m\ell$ | 5 | 5 | 5 | 4.5 | 4 | 3 | 1 | 0 | 0 | 0 | 0 | 0 |
| Comparative-9 | 36 g | 5 | 5 | 4.5 | 5 | 4.5 | 5 | 5 | 4.8 | 5 | 4.5 | 5 | 4.8 |

Note: The numerical values in the Table indicate the herbicidal effects against hardstem bulrush.

TEST EXAMPLE 5: Treatment at the germination of weeds

Rice seedlings were transplanted by a usual method to a paddy field in which seeds of various weeds and tubers were scattered immediately after paddling and leveling, and a unit plot of 10 m x 10 m was provided therein. At the germination stage of weeds upon expiration of one week after the transplantation, a liquid formulation was applied at one spot at the center, and a granule was applied uniformly in the plot. One month after the treatment, the plot was marked with 1 $m^2$ at five portions within 2.5 m from the center, and at eight portions outside 2.5 m, and the examination was conducted in the same manner as in Test Example 4.

The results are shown in Table 5 (the numerical values are average values, respectively, obtained by counting fractions of 0.05 and over as a whole number and disregarding the rest).

Table 5: Results of treatment at germination of weeds

| Formulation No. | Dose (ℓ,kg/10a) | Intermediate portion | | | | | | End portion | | | | | |
|---|---|---|---|---|---|---|---|---|---|---|---|---|---|
| | | Herbicidal effects | | | | | Phytotoxicity | Herbicidal effects | | | | | Phytotoxicity |
| | | 1* | 2* | 3* | 4* | 5* | | 1* | 2* | 3* | 4* | 5* | |
| 6 | 1 ℓ | 5 | 5 | 5 | 5 | 5 | 0 | 5 | 5 | 5 | 5 | 4.6 | 0 |
| 7 | 1 ℓ | 5 | 5 | 5 | 5 | 5 | 0 | 5 | 5 | 5 | 5 | 4.8 | 0 |
| 8 | 1 ℓ | 5 | 5 | 5 | 5 | 5 | 0 | 5 | 5 | 5 | 5 | 4.6 | 0 |
| 9 | 1 ℓ | 5 | 5 | 5 | 5 | 5 | 0 | 5 | 5 | 5 | 5 | 4.6 | 0 |
| 10 | 0.5 ℓ | 5 | 5 | 5 | 5 | 5 | 0.1 | 5 | 5 | 4.8 | 5 | 4.4 | 0 |
| Comparative-8 | 1 ℓ | 5 | 5 | 5 | 5 | 5 | 1.3 | 3.6 | 4.1 | 3.2 | 3.1 | 2.2 | 0 |
| Comparative-9 | 3 kg | 5 | 5 | 4.8 | 5 | 4.8 | 0 | 5 | 5 | 5 | 5 | 4.8 | 0 |

Note: 1*: barnyardgrass (Echinochloa crusqalli), 2*: pickerel-weed (Monochoria vagnalis),
3*: hardstem bulrush (Scirpus juncoides), 4*: arrowhead (Sagittaria pyqmaea),
5*: water nutgrass (Cyperus serotinus)

TEST EXAMPLE 6: Treatment at the growing stage of weeds

In a paddy field prepared in the same manner as in Test Example 5, a unit plot of 5 m × 20 m was provided, and a liquid formulation was applied in one half amount at each of two portions at the center in the 5 m axis. A granule was uniformly applied over the entire surface in the plot.

One month after the treatment, markings of 1 m² were provided at ten portions in the plot, and the examination was conducted in the same manner as in Test Example 4.

The results are shown in Table 6 (the numerical values are average values).

Table 6: Results of treatment during the growing stage of weeds

| Formulation No. | Dose (ℓ,kg/10a) | Herbicidal effects | | | | | Phytoto-xicity |
|---|---|---|---|---|---|---|---|
| | | 1* | 2* | 3* | 4* | 5* | |
| 6 | 1 ℓ | 5 | 5 | 4.9 | 5 | 4.6 | 0 |
| 7 | 1 ℓ | 5 | 5 | 5 | 5 | 4.9 | 0 |
| 8 | 1 ℓ | 5 | 5 | 4.8 | 5 | 4.7 | 0 |
| 9 | 1 ℓ | 5 | 5 | 5 | 5 | 4.6 | 0 |
| 10 | 0.5 ℓ | 4.9 | 5 | 4.9 | 5 | 4.6 | 0 |
| Comparative-9 | 3 kg | 3.8 | 4.9 | 4.6 | 4.5 | 4.5 | 0 |

Note: 1*: barnyardgrass (Echinochloa crusgalli), 2*: pickerel-weed (Monochoria vaqnalis), 3*: hardstem bulrush (Scirpus juncoides), 4*: arrowhead (Sagittaria pygmaea), 5*: water nutgrass (Cyperus serotinus)

As is evident from the foregoing Test Examples, the herbicidal treatment can be simplified by the present invention, and a substantial reduction of labor has been made possible. Further, the active ingredient of the herbicide thereby serves effectively, so that it provides high herbicidal effect even by treatment at a stage where weeds have already grown, and the dose can be reduced by treatment at an early stage.

**Claims**

1. An oil suspension concentrate for direct paddy water application, which comprises from 5 to 40% by weight of 2',3'-dichloro-4-ethoxymethoxybenzanilide as a herbicidally active ingredient and a mineral oil or vegetable oil as a dispersing medium, wherein a nonionic surfactant and anionic surfactant having a HLB of from 3 to 10 are incorporated.

2. The oil suspension concentrate according to Claim 1, wherein the nonionic surfactant and anionic surfactant having a HLB of from 3 to 10 are selected from the group consisting of a sorbitan fatty acid ester, a polyoxyethylene sorbitan fatty acid ester, a polyoxyethylene resin acid ester, a polyoxyethylene alkyl ether, a polyoxyethylene fatty acid ester, a polyoxyethylene vegetable oil, a polyoxyethylene hardened vegetable oil, a polyoxyethylene fatty acid amide, a polyoxyethylene alkylamine, a polyoxyethylene polyoxypropylene block polymer, a polyoxyethylene alkylphenyl ether, a polyoxyethylene alkylphenyl ether polymer, a polyoxyalkylene benzylphenyl (or phenylphenyl) ether, a polyoxyalkylene styrylphenyl (or phenylphenyl) ether, an alkylbenzene sulfonate, a dialkyl sulfosuccinate, an alkylnaphthalene sulfonate, a naphthalene sulfonate formalin condensation product, an alkyl sulfate (or phosphate), a polyoxyethylene alkyl ether sulfate (or phosphate), a polyoxyethylene alkylphenyl ether sulfate (or phosphate), a polyoxyalkylene benzylphenyl (or phenylphenyl) ether sulfate (or phosphate), a polyoxyalkylene styrylphenyl (or phenylphenyl) ether sulfate (or phosphate) and a polyoxyethylene-polyoxypropylene block polymer sulfate (or phosphate).

3. The oil suspension concentrate according to Claim 1, wherein the mineral oil is agricultural machine oil, paraffin oil, naphthene oil or mineral spirit, and the vegetable oil is soybean oil, cotton oil, palm oil or sunflower oil.

4. An oil suspension concentrate for direct paddy water application, which comprises from 5 to 40% by weight of 2',3'-dichloro-4-ethoxymethoxybenzanilide and from 0.15 to 1.5% by weight of methyl-α-(4,6-dimethoxypyrimidin-2-ylcarbamoylsulfamoyl)-O-toluate as herbicidally active ingredients and a mineral oil or vegetable oil as a dispersing medium, wherein a nonionic surfactant and anionic surfactant having a HLB of from 3 to 10 are incorporated.

5. The oil suspension concentrate according to Claim 4, wherein the nonionic surfactant and anionic surfactant having a HLB of from 3 to 10 are selected from the group consisting of a sorbitan fatty acid ester, a polyoxyethylene sorbitan fatty acid ester, a polyoxyethylene resin acid ester, a polyoxyethylene alkyl ether, a polyoxyethylene fatty acid ester, a polyoxyethylene vegetable oil, a polyoxyethylene hardened vegetable oil, a polyoxyethylene fatty acid amide, a polyoxyethylene alkylamine, a polyoxyethylene polyoxypropylene block polymer, a polyoxyethylene alkylphenyl ether, a polyoxyethylene alkylphenyl ether polymer, a polyoxyalkylene benzylphenyl (or phenylphenyl) ether, a polyoxyalkylene styrylphenyl (or phenylphenyl) ether, an alkylbenzene sulfonate, a dialkyl sulfosuccinate, an alkylnaphthalene sulfonate, a naphthalene sulfonate formalin condensation product, an alkyl sulfate (or phosphate), a polyoxyethylene alkyl ether sulfate (or phosphate), a polyoxyalkylene alkylphenyl ether sulfate (or phosphate), a polyoxyalkylene benzyl phenyl (or phenylphenyl) ether sulfate (or phosphate) and a polyoxyethylenepolyoxypropylene block polymer sulfate (or phosphate).

6. The oil suspension concentrate according to Claim 4, wherein the mineral oil is agricultural machine oil, paraffin oil, naphthene oil or mineral spirit, and the vegetable oil is soybean oil, cotton oil, palm oil or sunflower oil.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 087 237  (HODOGAYA CHEMICAL CO., LTD) <br> – – – | | A 01 N 37/40 <br> A 01 N 25/04 // <br> (A 01 N 37/40 |
| A | EP-A-0 313 317  (ISHIHARA SANGYO KAISHA, LTD) <br> – – – | | A 01 N 47:36 <br> A 01 N 25:04 ) <br> (A 01 N 25/04 |
| A | CHEMICAL ABSTRACTS, vol. 103, no. 5, 5th August 1985, page 159, abstract no. 33496q, Columbus, Ohio, US; & JP-A-60 42 312 (DU PONT DE NEMOURS, E.I., AND CO.) 06-03-1985 <br> – – – | | A 01 N 37:40 <br> A 01 N 47:36 ) |
| A | WO-A-8 802 598  (E.I. DU PONT DE NEMOURS & CO.) <br> – – – – – | | |

|  | TECHNICAL FIELDS SEARCHED (Int. Cl.5) |
|---|---|
|  | A 01 N |

The present search report has been drawn up for all claims

| Place of search | Date of completion of search | Examiner |
|---|---|---|
| The Hague | 25 July 91 | DONOVAN T.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document